# FASCICULE DE BREVET EUROPEEN

(11) **EP 2 458 319 B1**
(45) Date de publication et mention de la délivrance du brevet: **18.03.2015**
(21) Numéro de dépôt: 11290527.8
(22) Date de dépôt: 17.11.2011
(51) Int. Cl.: F42B 10/66, F02K 9/90

(54) **Système pour piloter autour de ses axes de rotation d'un mobile mû par réaction, en particulier un missile**
System zum Lenken eines reaktionsangetriebenen Mobils um seine Drehachsen, insbesondere einer Rakete
System for piloting a jet-propelled mobile about the axes of rotation thereof, in particular a missile

(30) Priorité: 24.11.2010 FR 1004570
(43) Date de publication de la demande: 30.05.2012
(73) Titulaire: MBDA France, 92350 Le Plessis-Robinson (FR)
(72) Inventeur: Mazenq, Lionel, 92130 Issy les Moulineaux (FR)
(74) Mandataire: Hauer, Bernard

(56) Documents cités:
- US-A- 3 150 486
- US-A- 3 986 683
- US-A- 4 432 512

## Description

La présente invention concerne un système pour le pilotage d'un mobile mû par réaction, en particulier un missile, autour de ses axes de rotation, ainsi qu'un mobile pourvu d'un tel système de pilotage.

On sait qu'il existe trois modes de pilotage différents généralement employés sur les missiles modernes, à savoir :
- un pilotage par dispositifs aérodynamiques (gouvernes, canards) ;
- un pilotage par jets auxiliaires ; et
- un pilotage par orientation de la poussée.

Parmi les dispositifs d'orientation de la poussée, il existe, entre autres, un pilotage par couteaux. Dans ce cas, des couteaux agissent sur les flux de sortie de la ou des tuyères du missile dans le but de contrôler l'orientation de la poussée dudit missile. Le brevet US 4 432 512 A, qui forme un point de départ pour le préambule de la revendication 1, décrit ainsi un exemple de pilotage par couteaux ou déflecteurs.

On peut également citer des tuyères orientables ou des gouvernes de jet en sortie d'un élément divergent des tuyères.

La présente invention concerne un système pour le pilotage par orientation de la poussée d'un mobile mû par réaction, en particulier d'un missile, qui permet de combiner compacité, simplicité de réalisation et coûts réduits.

A cette fin, selon l'invention, ledit système pour le pilotage autour de ses trois axes de rotation d'un mobile mû par réaction et pourvu de deux tuyères, ce système de pilotage comportant des déflecteurs de flux aptes à agir sur les flux de sortie desdites tuyères de manière à contrôler l'orientation de la poussée du mobile, et des moyens d'actionnement commandables desdits déflecteurs de flux, est remarquable en ce qu'il comporte :
- deux premiers déflecteurs de flux, dont l'un est apte à agir exclusivement sur le flux de sortie de l'une desdites tuyères et dont l'autre est apte à agir exclusivement sur le flux de sortie de l'autre tuyère, ces deux premiers déflecteurs de flux coopérant de manière à pouvoir piloter le mobile selon deux de ses trois axes de rotation, de préférence les axes de tangage et de roulis ; et
- un second déflecteur de flux qui est apte à agir sur les flux de sortie des deux tuyères, mais sur un flux de sortie à la fois, de manière à pouvoir piloter le mobile selon le troisième de ses axes de rotation, de préférence l'axe de lacet.

Ainsi, grâce à l'invention, on obtient un système de pilotage du type à orientation de poussée, qui permet de réaliser un contrôle de la trajectoire d'un mobile (mû par réaction) selon l'ensemble de ses trois axes de rotation (tangage, roulis, lacet). De plus, comme précisé ci-dessous, ce système de pilotage, et notamment lesdits déflecteurs de flux, peuvent être réalisés de façon simple et à coût réduit.

En outre, ce système de pilotage conforme à l'invention présente un encombrement réduit et est donc approprié à des missiles peu onéreux et peu encombrants.

Dans un mode de réalisation préféré, au moins certains (mais de préférence l'ensemble) desdits déflecteurs de flux sont formés de manière :
- à être déplacés par simple rotation ; et
- à réaliser une déviation de la poussée, au niveau de chaque tuyère, dans un cône de demi-ouverture maximale (sensiblement) de l'ordre de 12° et dont le sommet correspond au centre de poussée de la tuyère correspondante.

En outre, avantageusement, lesdits déflecteurs de flux présentent un contour courbe, au moins au niveau des parties de ces déflecteurs de flux, destinées à agir sur les flux de sortie. Ce contour courbe permet, notamment, d'éviter de générer des efforts de nature à dévier le mobile propulsé selon une trajectoire gauche.

Dans un mode de réalisation préféré, lesdits premiers déflecteurs de flux sont réalisés sous forme d'un élément déflecteur à double couteau, et ledit second déflecteur de flux est réalisé sous forme d'un élément déflecteur à couteau unique qui est agencé entre les deux tuyères, ce qui permet notamment de réaliser les déflecteurs de flux de manière simple et à coût réduit.

En outre, avantageusement, lesdits premiers déflecteurs de flux sont formés de manière à être déplacés, dans le flux de sortie des tuyères respectives :
- de façon symétrique, pour piloter le mobile selon l'un desdits deux axes de rotation (dévolus à ces premiers déflecteurs de flux), de préférence l'axe de tangage ; et
- de façon antisymétrique, pour piloter le mobile selon l'autre desdits deux axes de rotation, de préférence l'axe de roulis.

Par ailleurs, dans un mode de réalisation particulier, le système de pilotage conforme à l'invention comprend, de plus, des moyens de commande desdits premiers déflecteurs de flux qui commandent ces derniers pour qu'ils compensent, le cas échéant, des effets parasites générés par l'action dudit second déflecteur de flux.

La présente invention concerne également un mobile mû par réaction, de préférence un missile, qui est pourvu d'un système de pilotage tel celui que décrit ci-dessus.

Dans une application à un missile, la présente invention permet de disposer de trois axes de contrôle du missile, sans pour autant avoir recours à des dispositifs de pilotage complexes et onéreux tels qu'un dispositif de pilotage par gouvernes aérodynamiques ou un dispositif de pilotage par tuyères orientables ou gouvernes de jet. La présente invention est donc particulièrement appropriée à des missiles de faible gabarit, destinés à être mis en oeuvre en grands nombres dans le cadre d'engagements terrestres.
Les figures du dessin annexé feront bien comprendre comment l'invention peut être réalisée. Sur ces figures, des références identiques désignent des éléments semblables.
La figure 1 montre schématiquement les éléments principaux d'un système de pilotage conforme à l'invention.
La figure 2 est une vue en perspective d'un missile équipé d'un système de pilotage conforme à l'invention.
Les figures 3 à 5 sont des vues de l'arrière d'un missile conforme à un premier mode de réalisation de l'invention, illustrant les positions des déflecteurs de flux, pour piloter le missile respectivement selon ses axes de roulis, tangage, et lacet.
La figure 6 est une vue semblable à celles des figures 3 à 5, représentant l'arrière d'un missile conforme à un deuxième mode de réalisation de l'invention et illustrant les positions des déflecteurs de flux, pour piloter le missile en privilégiant le contrôle sur l'axe de lacet.

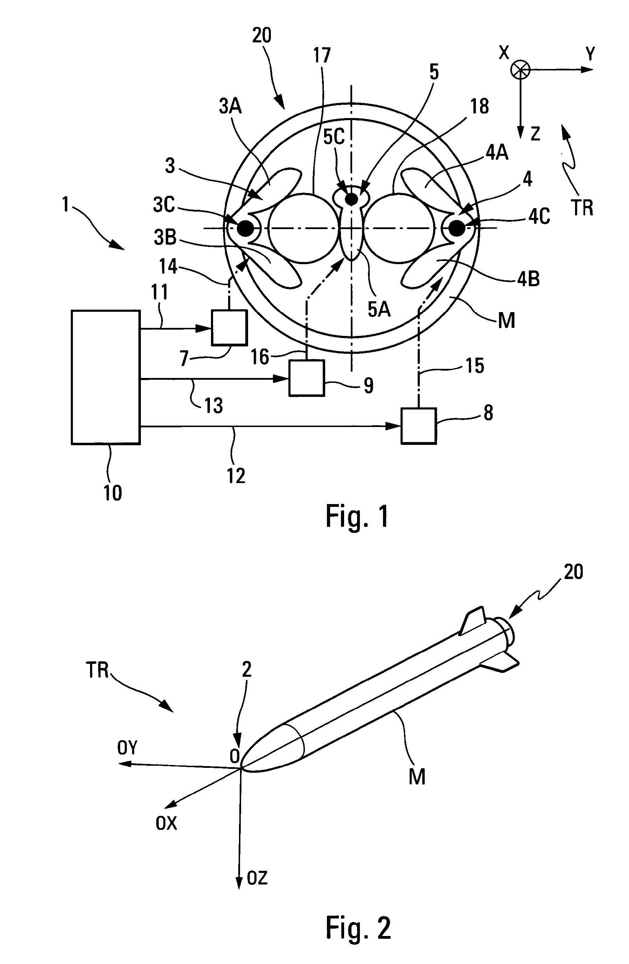

Le système 1 conforme à l'invention et représenté schématiquement sur la figure 1 est destiné à aider au pilotage d'un mobile mû par réaction, en l'occurrence un missile M tel que représenté à titre d'exemple sur la figure 2, et ceci autour de ses trois axes de rotation (tangage, roulis, lacet).

Dans la présentation ci-dessous de l'invention, on utilise un trièdre de référence TR (représenté sur les figures 1 et 3 à 6) pour faciliter la description. Ce trièdre de référence TR correspond au trièdre utilisé, de façon usuelle, par convention, pour un missile. Dans ce trièdre de référence TR, comme représenté sur la figure 2, l'origine O est situé à la pointe du nez 2 du missile M, et les axes OX, OY et OZ dudit trièdre sont définis comme suit:
- l'axe OX est longitudinal par rapport au corps propulseur du missile M et est orienté vers l'avant dudit missile M ;
- l'axe OZ est orthogonal à l'axe longitudinal du missile M et est orienté vers le bas ; et
- l'axe OY est défini de manière à former un trièdre direct avec lesdits axes OX et OZ.

Ledit système de pilotage 1 est du type à orientation de poussée et comporte, de façon usuelle :
- des déflecteurs de flux (ou intercepteurs de jet) 3, 4 et 5 qui sont aptes à agir sur les flux (ou jets) de sortie des tuyères fixes 17, 18 du missile M de manière à contrôler l'orientation de la poussée de ce dernier ; et
- des moyens d'actionnement 7, 8 et 9 usuels (représentés schématiquement), par exemple des vérins ou des moteurs électriques travaillant en rotation, qui sont commandés par une unité de commande 10 usuelle (via des liaisons 11, 12 et 13 respectivement) et qui déplacent lesdits déflecteurs de flux 3, 4 et 5, comme illustré schématiquement par des flèches 14, 15, et 16 en traits mixtes, en fonction d'ordres reçus de ladite unité de commande 10 (via lesdites liaisons 11 à 13).

Selon l'invention, ledit système pilotage 1 est appliqué à un missile M pourvu de deux tuyères 17 et 18 qui sont fixes à l'arrière 20 dudit missile M. Dans le mode de réalisation représenté sur les figures, les axes des tuyères 17 et 18 sont parallèles à l'axe longitudinal OX du missile M, et ces dernières sont agencées symétriquement par rapport au plan OXZ. Ainsi, en l'absence d'obstacles en sortie, les flux de sortie des tuyères 17 et 18 sont parallèles à l'axe longitudinal OX du missile M et sont similaires.

De plus, selon l'invention, ledit système de pilotage 1 comporte :
- deux déflecteurs de flux 3 et 4 à double couteau 3A et 3B, 4A et 4B. Le déflecteur de flux 3 est apte à agir exclusivement sur le flux de sortie de la tuyère 17, et le déflecteur de flux 4 est apte à agir exclusivement sur le flux de sortie la tuyère 18. De plus, selon l'invention, ces deux déflecteurs de flux 3 et 4 coopèrent, comme précisé ci-dessous, de manière à pouvoir piloter le missile M selon deux de ses trois axes de rotation, de préférence les axes de tangage et de roulis ; et
- un déflecteur de flux 5 à couteau unique 5A, qui est apte à agir sur les flux de sortie des deux tuyères 17 et 18, mais sur un flux de sortie à la fois. Ce déflecteur de flux 5 est positionné de façon symétrique entre les deux tuyères 17 et 18 et il peut intercepter le jet de l'une ou l'autre de ces deux tuyères 17 et 18 pour créer un couple dans le plan dans lequel sont inclus les axes géométriques des deux tuyères 17 et 18. Ce déflecteur de flux 5 est destiné à piloter le missile M selon le troisième de ses axes de rotation, de préférence l'axe de lacet.

Les déflecteurs de flux (ou intercepteurs de jet) 3, 4 et 5 comprennent donc des éléments déflecteurs, de type spoiler ou couteau, qui interviennent dans le plan de sortie de deux tuyères 17 et 18 fixes.

Dans un mode de réalisation préféré, lesdits déflecteurs de flux 3, 4 et 5 sont formés de manière :
- à être déplacés par simple rotation, autour de pivots 3C, 4C et 5C usuels respectifs, dont les axes de rotation sont parallèles à l'axe longitudinal OX ; et
- à réaliser une déviation de la poussée, au niveau de chaque tuyère 17, 18, dans un cône de demi-ouverture maximale de l'ordre de 12°. Le sommet de ce cône correspond au centre de poussée de la tuyère correspondante.

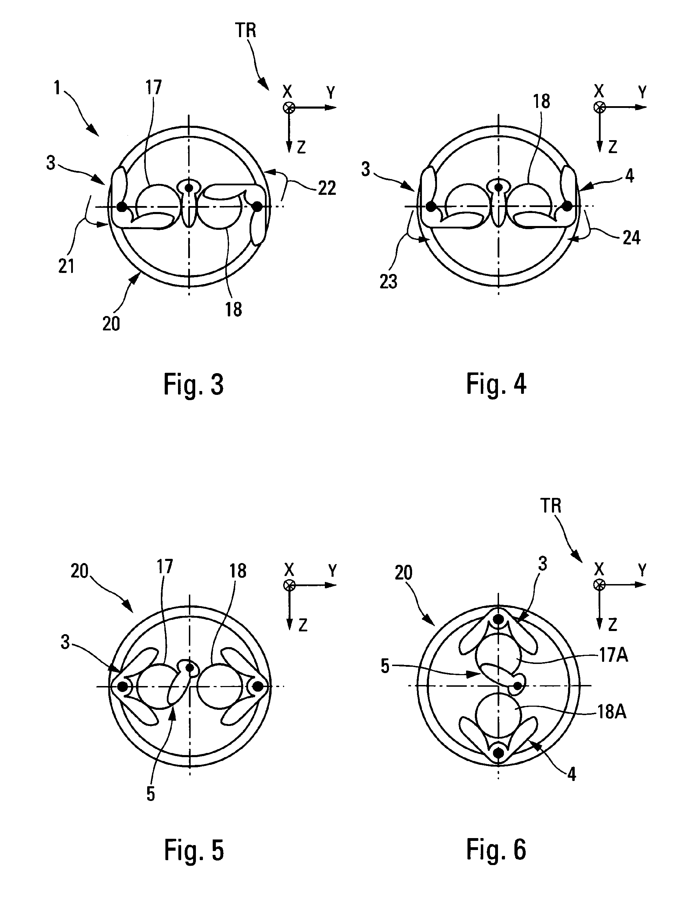

En outre, lesdits déflecteurs de flux 3, 4 et 5 présentent, au moins au niveau des parties des couteaux 3A, 3B, 4A, 4B et 5A destinées à agir sur les flux de sortie, un contour courbe, comme représenté par exemple sur les figures 3 à 6. Ce contour courbe permet, notamment, d'éviter de générer des efforts de nature à dévier le missile M propulsé selon une trajectoire gauche.

En outre, la forme des couteaux 3A, 3B, 4A, 4B et 5A peut être optimisée de manière à minimiser les pertes lors de la déviation des jets propulsifs. Quant à la structure de ces couteaux, elle peut notamment être adaptée aux conditions de température en sortie de tuyère et à la masse allouée au système de pilotage 1 .

Par ailleurs, lesdits déflecteurs de flux 3 et 4 sont déplacés, dans les flux de sortie des tuyères 1 7 et 18 respectives :
- de manière symétrique, pour piloter le missile M selon l'un desdits deux axes de rotation (dévolus auxdits déflecteurs de flux 3 et 4), de préférence l'axe de tangage, comme représenté sur la figure 4 ; et
- de manière antisymétrique, pour piloter le missile M selon l'axe de roulis, comme représenté sur la figure 3.

Par conséquent, dans l'exemple des figures 3 à 6 :
- le couple de contrôle en tangage est généré par l'introduction symétrique des déflecteurs de flux 3 et 4 dans le jet de chaque tuyère 17, 18, à partir du haut ou du bas (du point de vue des axes missiles), à savoir à chaque fois par l'introduction d'un couteau desdits déflecteurs de flux 3 et 4 à double couteau 3A et 3B, 4A et 4B ;
- le couple de contrôle en roulis est généré par l'introduction antisymétrique des déflecteurs de flux 3 et 4 dans le jet de chaque tuyère 17, 18 à partir du haut ou du bas (du point de vue des axes missiles) ; et
- le couple de contrôle en lacet est généré par l'introduction du déflecteur de flux 5 (situé entre les deux tuyères 17 et 18) dans le jet de l'une ou l'autre de ces deux tuyères 17 et 18 (en fonction du sens souhaité), comme représenté sur la figure 5.

Le contrôle du missile M autour de ses trois axes de rotation est ainsi réalisé par la combinaison des trois types de mouvements déflecteurs de flux décrits ci-dessus.

Sur les figures 3 à 5, on a donc représenté le positionnement des déflecteurs de flux 3, 4 et 5 pour la génération de couples autour, respectivement, de l'axe de roulis (rotation illustrée par des flèches 21 et 22), de l'axe de tangage (rotation illustrée par des flèches 23 et 24) et de l'axe de lacet.

La disposition des deux déflecteurs de flux 3 et 4 permet donc un contrôle biaxe (tangage/roulis) du missile M selon qu'ils évoluent de façon symétrique ou antisymétrique par rapport au plan OXZ. Ces deux déflecteurs de flux 3 et 4 sont symétriques par rapport audit plan OXZ. Le troisième déflecteur de flux 5 permet, à lui seul, un contrôle en lacet (figure 5) en balayant selon le besoin le plan de sortie de l'une ou l'autre des deux tuyères 17 et 18. L'originalité du système de pilotage 1 conforme à l'invention réside, notamment, dans la présence de ce troisième déflecteur de flux 5 disposé entre les deux tuyères 1 7 et 18 et permettant à lui seul un contrôle en lacet, en intervenant alternativement sur les flux de sortie des deux tuyères 17 et 18.

En variante, la disposition des tuyères dans le plan vertical peut être amenée à être modifiée selon le type de mouvement (lacet ou tangage) à privilégier. Dans l'exemple de la figure 6, le déflecteur de flux 5 à couteau unique est destiné à réaliser un contrôle en tangage (en agissant sur les flux de sortie de tuyères 17A, 18A), et non plus un contrôle en lacet comme sur la figure 5.

Par ailleurs, dans un mode de réalisation particulier, ledit système de pilotage 1 comporte, de plus, des moyens de commande (non représentés spécifiquement) qui sont, par exemple, intégrés dans l'unité de commande 10. Ces moyens de commande sont destinés à commander lesdits déflecteurs de flux 3 et 4 pour qu'ils agissent sur les flux de sortie des tuyères 1 7 et 18 dans le but de compenser, le cas échéant, des effets parasites générés par l'action dudit déflecteur de flux 5.

Le système de pilotage 1 conforme à l'invention permet donc de réaliser un contrôle de la trajectoire d'un mobile (mû par réaction), notamment d'un missile M, selon l'ensemble de ses trois axes de rotation (tangage, roulis, lacet). De plus, ce système de pilotage 1 présente, notamment, les avantages suivants :
- il présente un coût réduit, en raison des tuyères fixes et de la simplification possible de l'actionnement des dispositifs mobiles ; et
- il est peu encombrant.

En outre, comme ledit système de pilotage 1 ne comprend pas de dispositif de pilotage complexe et onéreux tel qu'un dispositif de pilotage par gouvernes aérodynamiques ou un dispositif de pilotage par tuyères orientables, il est particulièrement bien approprié à des missiles peu onéreux, et peu encombrants, en particulier à des missiles qui sont destinés à être mis en oeuvre en grands nombres dans le cadre d'engagements terrestres.

## Revendications

1. Système pour le pilotage autour de ses trois axes de rotation (OX, OY, OZ) d'un mobile (M) mû par réaction et pourvu de deux tuyères (17, 18), ledit système (1) comportant des déflecteurs de flux (3, 4, 5) aptes à agir sur les flux de sortie desdites tuyères (17, 18) de manière à contrôler l'orientation de la poussée du mobile (M), ainsi que des moyens d'actionnement (7, 8, 9) commandables desdits déflecteurs de flux (3, 4, 5),
ledit système (1) comportant aussi deux premiers déflecteurs de flux (3, 4), dont l'un (3) est apte à agir exclusivement sur le flux de sortie de l'une desdites tuyères (17) et dont l'autre (4) est apte à agir exclusivement sur le flux de sortie de l'autre tuyère (18), ces deux premiers déflecteurs de flux (3, 4) coopérant de manière à pouvoir piloter le mobile (M) selon deux de ses trois axes de rotation, **caractérisé en ce qu'**il comporte un second déflecteur de flux (5) qui est apte à agir sur les flux de sortie des deux tuyères (17, 18), mais sur un flux de sortie à la fois, de manière à pouvoir piloter le mobile (M) selon le troisième de ses axes de rotation.

2. Système selon la revendication 1,
**caractérisé en ce qu'**au moins certains desdits déflecteurs de flux (3, 4, 5) sont formés de manière à être déplacés en rotation.

3. Système selon l'une des revendications 1 et 2,
**caractérisé en ce qu'**au moins certains desdits déflecteurs de flux (3, 4, 5) sont formés de manière à réaliser une déviation de la poussée, au niveau de chaque tuyère (17, 18), dans un cône de demi-ouverture maximale sensiblement de 12° et dont le sommet correspond au centre de poussée de la tuyère (17, 18) correspondante.

4. Système selon l'une quelconque des revendications 1 à 3, **caractérisé en ce qu'**au moins certains desdits déflecteurs de flux (3, 4, 5) présentent un contour courbe, au moins au niveau des parties de ces déflecteurs de flux, destinées à agir sur les flux de sortie.

5. Système selon l'une quelconque des revendications précédentes,
**caractérisé en ce que** lesdits premiers déflecteurs de flux (3, 4) sont réalisés sous forme d'un élément déflecteur à double couteau (3A, 3B ; 4A, 4B), et **en ce que** ledit second déflecteur de flux (5) est réalisé sous forme d'un élément déflecteur à couteau unique (5A) qui est agencé entre les deux tuyères (17, 18).

6. Système selon l'une quelconque des revendications précédentes,
**caractérisé en ce que** lesdits premiers déflecteurs de flux (3, 4) sont formés de manière à être déplacés, dans le flux de sortie des tuyères (17, 18) respectives :
- de façon symétrique, pour piloter le mobile (M) selon l'un des axes de lacet ou de tangage ; et
- de façon antisymétrique, pour piloter le mobile (M) selon l'axe de roulis.

7. Système selon l'une quelconque des revendications précédentes,
**caractérisé en ce qu'**il comporte, de plus, des moyens de commande (10) desdits premiers déflecteurs de flux (3, 4) qui sont formés de manière à commander ces derniers pour qu'ils compensent des effets parasites générés par l'action dudit second déflecteur de flux (5) sur le flux de sortie d'une tuyère (17, 18).

8. Mobile mû par réaction, en particulier missile,
**caractérisé en ce qu'**il comporte un système (1) tel que celui spécifié sous l'une quelconque des revendications 1 à 7.

## Patentansprüche

1. System zur Steuerung eines Mobilgeräts (M), das durch Reaktion bewegt wird und mit zwei Rohren (17, 18) versehen ist, um seine drei Drehachsen (OX, OY, OZ), wobei das System (1) Strömungsleitelemente (3, 4, 5), die geeignet sind, auf die Ausgangsströmungen der Rohre (17, 18) einzuwirken, um die Ausrichtung des Schubs des Mobilgeräts (M) zu kontrollieren, sowie Betätigungsmittel (7, 8, 9) umfasst, die von den Strömungsleitelementen (3, 4, 5) steuerbar sind,
wobei das System (1) ferner umfasst zwei erste Strömungsleitelemente (3, 4), von denen eines (3) geeignet ist, ausschließlich auf die Ausgangsströmung eines der Rohre (17) einzuwirken, und von denen das andere (4) geeignet ist, ausschließlich auf die Ausgangsströmung des anderen Rohrs (18) einzuwirken, wobei diese beiden ersten Strömungsleitelemente (3, 4) derart zusammenwirken, dass das Mobilgerät (M) entlang zwei seiner drei Drehachsen gesteuert werden kann,
**dadurch gekennzeichnet, dass** es umfasst ein zweites Strömungsleitelement (5), das geeignet ist, auf die Ausgangsströmungen der zwei Rohre (17, 18) einzuwirken, allerdings auf eine Ausgangsströmung auf einmal, um das Mobilgerät (M) entlang der dritten seiner Drehachsen steuern zu können.

2. System nach Anspruch 1,
**dadurch gekennzeichnet, dass** mindestens gewisse der Strömungsleitelemente (3, 4, 5) derart ausgebildet sind, dass sie in Drehung bewegt werden können.

3. System nach einem der Ansprüche 1 und 2,
**dadurch gekennzeichnet, dass** mindestens gewisse der Strömungsleitelemente (3, 4, 5) derart ausgebildet sind, dass eine Ablenkung des Schubs im Bereich jedes Rohrs (17, 18) in einen Kegel mit maximaler halber Öffnung von im Wesentlichen 12° erfolgt, dessen Spitze dem Schubzentrum des entsprechenden Rohrs (17, 18) entspricht.

4. System nach einem der Ansprüche 1 bis 3,
**dadurch gekennzeichnet, dass** mindestens gewisse der Strömungsleitelemente (3, 4, 5) eine gekrümmte Kontur zumindest im Bereich jener Teile dieser Strömungsleitelemente aufweisen, die dazu bestimmt sind, auf die Ausgangsströmungen einzuwirken.

5. System nach einem der vorhergehenden Ansprüche,
**dadurch gekennzeichnet, dass** die ersten Strömungsleitelemente (3, 4) in Form eines Strömungsleitelements mit Doppelmesser (3A, 3B; 4A, 4B) ausgeführt sind, und dass das zweite Strömungsleitelement (5) in Form eines Strömungsleitelements mit Einzelmesser (5A) ausgeführt ist, das zwischen den beiden Rohren (17, 18) angeordnet ist.

6. System nach einem der vorhergehenden Ansprüche,
**dadurch gekennzeichnet, dass** die ersten Strömungsleitelemente (3, 4) derart ausgebildet sind, dass sie in der Ausgangsströmung der jeweiligen Rohre (17, 18):
- symmetrisch verschoben werden, um das Mobilgerät (M) entlang einer der Gier- oder der Nickachsen zu steuern; und
- antisymmetrisch verschoben werden, um das Mobilgerät (M) entlang der Rollachse zu steuern.

7. System nach einem der vorhergehenden Ansprüche,
**dadurch gekennzeichnet, dass** es ferner Mittel (10) zur Steuerung der ersten Strömungsleitelemente (3, 4) umfasst, die derart ausgebildet sind, dass sie diese letztgenannten derart steuern, dass sie Störeffekte, die durch die Wirkung des zweiten Strömungsleitelements (5) auf die Ausgangsströmung eines Rohrs (17, 18) erzeugt werden, ausgleichen.

8. Mobilgerät, das durch Reaktion bewegt wird, insbesondere Flugkörper,
**dadurch gekennzeichnet, dass** es ein System (1), wie in einem der Ansprüche 1 bis 7 spezifiziert, umfasst.

## Claims

1. System for steering, about its three axes of rotation (OX, OY, OZ), a moving body (M) propelled by jet reaction and provided with two nozzles (17, 18), said system (1) having flow deflectors (3, 4, 5) able to act on the outlet flows of said nozzles (17, 18) in such a way as to control the orientation of the thrust of the moving body (M), and also controllable means (7, 8, 9) for actuating said flow deflectors (3, 4, 5), said system (1) having also two first flow deflectors (3, 4), one of which (3) is able to act exclusively on the outlet flow of one of said nozzles (17) and the other of which (4) is able to act exclusively on the outlet flow of the other nozzle (18), these two first flow deflectors (3, 4) cooperating so as to be able to steer the moving body (M) about two of its three axes of rotation, **characterised in that** it has a second flow deflector (5) which is able to act on the outlet flows of both jet nozzles (17, 18), but on one outlet flow at a time, so as to be able to steer the moving body (M) about its third axis of rotation.

2. System according to claim 1,
**characterised in that** at least some of said flow deflectors (3, 4, 5) are shaped in such a way as to be displaced in rotation.

3. System according to claim 1 or claim 2,
**characterised in that** at least some of said flow deflectors (3, 4, 5) are shaped in such a way as to produce a deflection of the thrust, at each nozzle (17, 18), in a cone with a maximum half-angle of approximately 12° and the vertex of which corresponds to the centre of thrust of the corresponding nozzle (17, 18).

4. System according to any one of claims 1 to 3,
**characterised in that** at least some of said flow deflectors (3, 4, 5) have a curved profile, at least in the region of the portions of these flow deflectors intended to act on the outlet flows.

5. System according to any one of the preceding claims,
**characterised in that** said first flow deflectors (3, 4) are produced in the form of a deflector component with a double blade (3A, 3B; 4A, 4B), and **in that** said second flow deflector (5) is produced in the form of a deflector component with a single blade (5A) which is arranged between the two nozzles (17, 18).

6. System according to any one of the preceding claims,
**characterised in that** said first flow deflectors (3, 4) are formed so as to be displaced, in the outlet flows of the respective nozzles (17, 18):
- symmetrically, in order to steer the moving body (M) about the yaw axis or the pitch axis; and
- asymmetrically, in order to steer the moving body (M) about the roll axis.

7. System according to any one of the preceding claims,
**characterised in that** it also has means (10) for controlling said first flow deflectors (3, 4) which are formed so as to control said flow deflectors so that they compensate for unwanted effects produced by the action of said second flow deflector (5) on the outlet flow of a nozzle (17, 18).

8. Moving body propelled by jet reaction, in particular a missile,
**characterised in that** it has a system (1) like that specified in any one of claims 1 to 7.
